# EUROPEAN PATENT SPECIFICATION

(11) **EP 3 006 749 B1**
(45) Date of publication and mention of the grant of the patent: **30.09.2020**
(21) Application number: 14804001.7
(22) Date of filing: 15.05.2014
(51) Int. Cl.: F16C 11/06, B29C 33/38, F16J 3/04, F16J 15/52, F16C 33/64

(54) **BALL JOINT DUST COVER**
STAUBABDECKUNG FÜR KUGELGELENKE
CACHE-POUSSIÈRE POUR JOINT À ROTULE

(30) Priority: 28.05.2013 JP 2013111528
(43) Date of publication of application: 13.04.2016
(73) Proprietor: NOK Corporation, Tokyo 105-8585 (JP)
(72) Inventor: IWASAKA Takayoshi, Makinohara-shi Shizuoka 421-0532 (JP); ISHIMORI Junichi, Makinohara-shi Shizuoka 421-0532 (JP); KUMAZAWA Toshikazu, Makinohara-shi Shizuoka 421-0532 (JP); SUZUKI Hiroshi, Makinohara-shi Shizuoka 421-0532 (JP)
(74) Representative: TBK
(86) International application number: PCT/JP2014/062903
(87) International publication number: WO 2014/192548

(56) References cited:
- JP-A- S63 194 914
- JP-A- 2001 323 923
- JP-A- 2001 323 923
- JP-A- 2009 030 793
- JP-A- 2009 030 793
- JP-A- 2010 501 791
- JP-A- 2011 179 549
- JP-A- 2012 126 033
- JP-A- 2012 229 734
- JP-U- H0 665 614
- JP-U- S58 165 366
- US-A- 3 901 518

## Description

### BACKGROUND OF THE INVENTION

### Field of the Invention

The present invention relates to a dust cover for a ball joint according to the appended claim 1.

Further, the present invention relates to a dust cover for a ball joint which is used in an automobile suspension device, and a steering device.

### Description of the Conventional Art

Conventionally, as a ball joint to which a dust cover is installed for the purpose of a dust prevention and a water prevention in a ball joint coupling portion, there has been known a dust cover for a ball joint which is described in Fig. 4 (patent document 1).

In a seal structure of this kind of ball joint dust cover, a spherical head portion 200 formed in one end of a ball stud 100 is retained within a socket 300.

Further, a shaft 400 in the other end of the ball stud 100 is fastened and fixed to a knuckle 500.

On the other hand, a one end large-diameter opening portion 800 of a dust cover 600 made of a rubber-like elastic material is fitted and retained to a step portion 310 which is formed in an outer peripheral surface of the socket 300 by a retention annular pressure ring 700, and the other end small-diameter opening portion 150 in which a reinforcing ring is embedded is retained to the shaft 400.

Since a film portion of this kind of conventional dust cover 600 is formed into a drum shape, the reinforcing ring could not be integrally embedded in the one end large-diameter opening portion 800 due to restrictions on molding.

Accordingly, the conventional dust cover has had trouble with an assembling property.

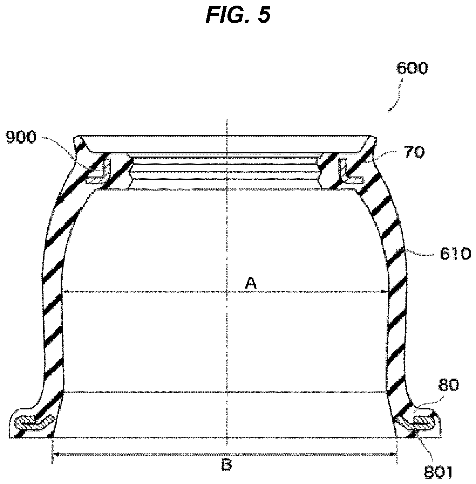

Consequently, in the case that the reinforcing ring is integrally embedded in the one end large-diameter opening portion 800, it is necessary to change the shape of the film portion of the dust cover 600 from the drum shape to a cylindrical shape shown in Fig. 5.

In other words, a maximum inner diameter A of a film portion 610 of the dust cover 600 made of the rubber-like elastic material is designed to be smaller than an inner diameter B of a reinforcing ring 801 which is embedded in the one end large-diameter opening portion 800.

According to the structure mentioned above, it is possible to take out an intermediate die of a molding die.

However, a strain applied to the film portion 610 of the dust cover 600 tends to be greater as a shape of the dust cover 600 comes close to a cylindrical shape, in spite of a good assembling property.

As a result, a crack or a breakage is generated in the film portion 610 of the dust cover 600, and a problem that a durability is lowered has been brought about. Further, there has been brought about a problem that a part of a circumference of the film portion 610 of the dust cover 600 is abnormally deformed to an inner diameter side at the setting time of the dust cover 600.

### Prior Art Documents

### Patent Documents

Patent Document 1: Japanese Unexamined Patent Publication No. 62-137408
Patent Document 2: Japanese Unexamined Utility Model Publication No. 1-40656

JP 2001 323923 A discloses a generic dust cover for a ball joint having the features of the preamble of claim 1. US 3 901 518 A and JP 2009 030793 A disclose further dust covers for a ball joint. JP S63 194914 A discloses a mold for deeply recessed articles.

### SUMMARY OF THE INVENTION

### Problem to be Solved by the Invention

The present invention is made by taking the problem mentioned above into consideration, and an object of the present invention is to provide a functional advantage and an assembling advantage by forming a film portion into a drum shape so as to hold down a strain applied to the film portion of a dust cover and suppress the reduction of durability of the dust cover, even in an aspect in which a reinforcing ring is embedded in a one end large-diameter opening portion and in the other end small-diameter opening portion of the dust cover.

### Means for Solving the Problem

The object is achieved by a dust cover for a ball joint having the features of claim 1. A further advantageous development is set out in claim 2.

### Effect of the Invention

The present invention achieves effects described below.

According to the ball joint of the dust cover of the invention, it is possible to provide a functional advantage and an assembling advantage by holding down a strain applied to the film portion of the dust cover and suppressing the reduction of durability of the dust cover, even in an aspect in which a reinforcing ring is embedded in the one end large-diameter opening portion and the other end small-diameter opening portion of the dust cover.

Further, according to the dust cover for the ball joint of the invention, it is possible to hold down the strain applied to the film portion of the dust cover and suppress the reduction of durability of the dust cover by forming the film portion into a drum shape.

Further, according to the dust cover for the ball joint of the invention, it is possible to easily mold the dust cover having the drum shaped film portion, by being constructed by a core die which is somewhat smaller than the inner diameter of the reinforcing ring, and by a plurality of separated semilunar dies which form a drum shape and have a semilunar cross section, and by being formed by a molding metal die which takes out these dies while sequentially disassembling the dies.

### BRIEF EXPLANATION OF THE DRAWINGS

Fig. 1 is a vertical cross sectional view of a dust cover for a ball joint according to the present invention;
Fig. 2 is a vertical cross sectional view before installation of the dust cover for the ball joint in Fig. 1;
Fig. 3 is a vertical cross sectional view showing a dimensional relationship before the installation of the dust cover for the ball joint in Fig. 1;

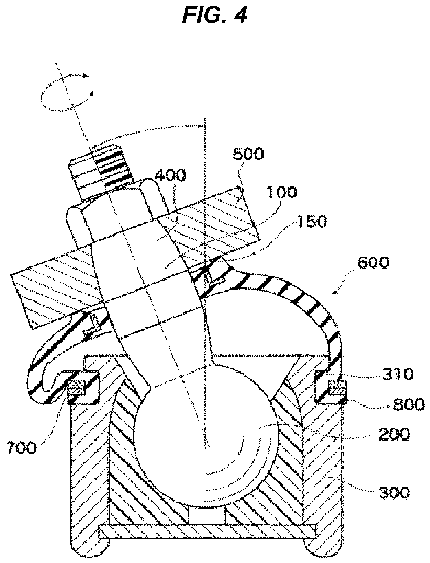

Fig. 4 is a vertical cross sectional view of a dust cover for a ball joint according to a prior art; and
Fig. 5 is a vertical cross sectional view before installation of the other dust cover for the ball joint according to the prior art.

### DETAILED DESCRIPTION OF PREFERRED EMBODIMENT

A description will be given below of a mode for carrying out the present invention.

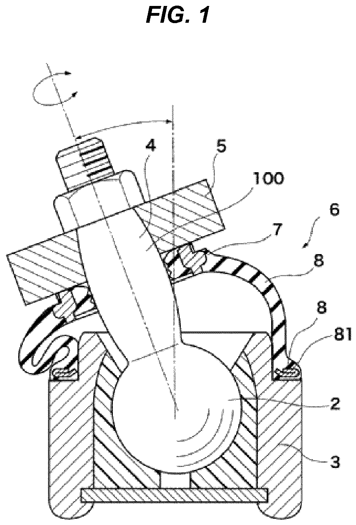

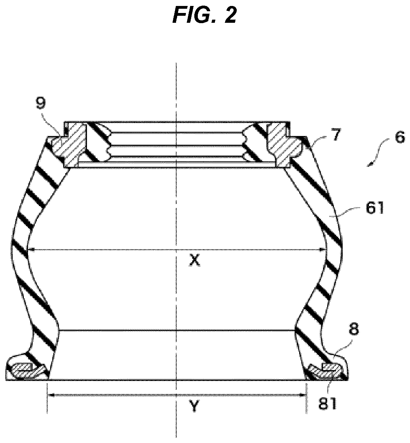

As shown in Figs. 1 and 2, a dust cover for a ball joint according to the present invention has a basic structure in which a spherical head portion 2 molded in one end of a ball stud 1 is retained within a socket 3, a shaft 4 in the other end of the ball stud 1 is fastened and fixed to a knuckle 5, a one end large-diameter opening portion 8 having an embedded reinforcing ring 81 is fixed and retained to an outer peripheral surface of the socket 3, the other end small-diameter opening portion 7 having an embedded reinforcing ring 9 is retained to the shaft 4, and the dust cover is provided with a film portion 61 which connects the large-diameter opening portion 8 and the small-diameter opening portion 7.

Further, a maximum inner diameter X of the film portion 61 is formed to be larger than an inner diameter Y of the reinforcing ring 81 which is embedded in the one end large-diameter opening portion 8.

More specifically, the film portion 61 is formed into a drum shape, and in the vicinity of the maximum inner diameter X, the film portion 61 is the thinnest.

As a result, it is possible to hold down a strain applied to the film portion of the dust cover, and it is possible to suppress the reduction of durability of the dust cover.

Further, since the maximum inner diameter X of the film portion 61 is formed to be larger than the inner diameter Y of the reinforcing ring 81 which is embedded in the one end large-diameter opening portion 8, it is necessary to devise ways of molding.

As a specific molding method, there are a method of molding by a molding metal mold having an intermediate die and an external die, and a method of forming an unvulcanized rubber having a cylindrical film portion 61 into a drum shape by blow molding.

However, in the case of molding by the molding metal mold, the maximum inner diameter X of the film portion 61 is formed to be larger than the inner diameter Y of the reinforcing ring 81 which is embedded in the one end large-diameter opening portion 8. As a result, it is necessary to devise ways of taking out the intermediate die from the inner portion of the molded dust cover by setting the intermediate die as the separated dies.

More specifically, it is possible to mold the dust cover by being constructed by a core die which is somewhat smaller than the inner diameter Y of the reinforcing ring 81, and a plurality of separated semilunar dies which form a drum shape and have a semilunar cross section, and by taking out these dies while sequentially disassembling the dies.

Particularly, it is possible to obtain the dust cover in which a dimensional precision is good and a rubber physical property is not lowered, by molding by the molding metal mold.

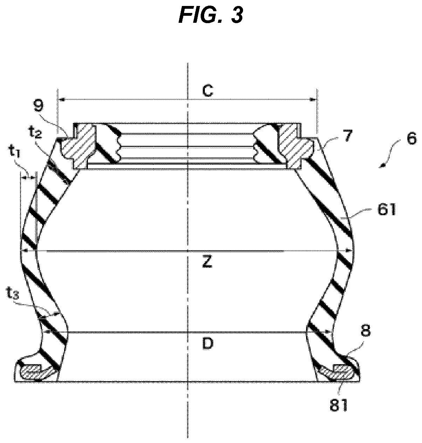

As shown in Fig. 3, the dust cover for the ball joint according to the present invention has the following dimensional relationship.

A maximum outer diameter Z of the drum shaped film portion 61 is larger than an outer diameter C in the other end small-diameter opening portion 7 side of the film portion 61 and than an outer diameter D in the one end large-diameter opening portion 8 side of the film portion 61.

Further, a thickness t1 of the maximum outer diameter Z portion of the film portion 61 is formed to be thinner than a thickness t2 in the other end small-diameter opening portion 7 side of the film portion 61 and than a thickness t3 in the one end large-diameter opening portion 8 side of the film portion 61.

According to the shape mentioned above, it is possible to hold down a strain applied to the film portion 61 of the dust cover 6 and it is possible to suppress the reduction of durability of the dust cover 6.

Further, a grease is sealed into the dust cover 6.

A metal material or a resin material is used for the reinforcing ring 9 and the reinforcing ring 81, however, the reinforcing ring 81 employs a member which is manufactured by punching a steel plate such as SPCC.

Further, a material of the dust cover can be selected and used appropriately in conformity to an intended use from a rubber-like elastic material such as chloroprene and a thermoplastic elastomer such as a polyester elastomer and a thermoplastic polyurethane.

Further, it goes without saying that the present invention is not limited to the best mode for carrying out the invention mentioned above, but can employ other various structures without deviating from the scope of the present invention.

### Industrial Applicability

The present invention can be used in a ball joint which is used in a suspension device and a steering device of an automobile.

### Description of Reference Numerals

1 ball stud
2 spherical head portion
3 socket
4 shaft
5 knuckle
6 dust cover
7 small-diameter opening portion
8 large-diameter opening portion
9 reinforcing ring
61 film portion
81 reinforcing ring

## Claims

1. A dust cover for a ball joint, the ball joint comprising:
a spherical head portion (2) formed in one end of a ball stud (1), the spherical head portion being retained within a socket (3);
a shaft (4) in the other end of said ball stud (1), the shaft being fastened and fixed to a knuckle (5);
the dust cover comprising:
a one end large-diameter opening portion (8) having an embedded reinforcing ring (81), the one end large-diameter opening portion being fixable and retainable to an outer peripheral surface of said socket (3);
the other end small-diameter opening portion (7) having an embedded reinforcing ring (9), the other end small-diameter opening portion being retainable to said shaft (4);
a film portion (61) connecting said large-diameter opening portion (8) and said small-diameter opening portion (7); and
the dust cover being made of an elastic material,
**characterized in that**
in an unmounted state, a maximum inner diameter (X) of said film portion (61) is larger than an inner diameter (Y) of said reinforcing ring (81) which is embedded in said one end large-diameter opening portion (8), said film portion (61) is formed into a drum shape, and
a thickness (t1) of a maximum outer diameter (Z) portion of said film portion (61) is formed to be thinner than a thickness (t2) in an other end small-diameter opening portion (7) side of said film portion (61) and that a thickness (t3) in an one end large-diameter opening portion (8) side of said film portion (61).

2. The dust cover for the ball joint according to claim 1, wherein the dust cover is configured to be molded by being constructed by a core die which is somewhat smaller than the inner diameter (Y) of the reinforcing ring (81), and a plurality of separated semilunar dies which form a drum shape and have a semilunar cross section, and being formed by a molding metal die which takes out these dies while sequentially disassembling the dies.

## Patentansprüche

1. Staubschutzabdeckung für ein Kugelgelenk, wobei das Kugelgelenk Folgendes aufweist:
einen kugelförmigen Kopfabschnitt (2), der an einem Ende eines Kugelbolzens (1) ausgebildet ist, wobei der kugelförmige Kopfabschnitt innerhalb einer Aufnahme (3) gehalten wird;
einen Schaft (4) an dem anderen Ende des Kugelbolzens (1), wobei der Schaft an einem Schenkel (5) befestigt und fixiert ist;
wobei die Staubschutzabdeckung Folgendes aufweist:
einen Großdurchmesseröffnungsabschnitt (8) des einen Endes mit einem eingebetteten Verstärkungsring (81), wobei der Großdurchmesseröffnungsabschnitt des einen Endes an eine Außenumfangsfläche der Aufnahme (3) fixiert und gehalten werden kann;
den Kleindurchmesseröffnungsabschnitt (7) des anderen Endes mit einem eingebetteten Verstärkungsring (9), wobei der Kleindurchmesseröffnungsabschnitt des anderen Endes an dem Schaft (4) gehalten werden kann;
einen Filmabschnitt (61), der den Großdurchmesseröffnungsabschnitt (8) mit dem Kleindurchmesseröffnungsabschnitt (7) verbindet; und
wobei die Staubschutzabdeckung aus einem elastischen Material gefertigt ist,
**dadurch gekennzeichnet, dass**
in einem nicht montierten Zustand ein Maximalinnendurchmesser (X) des Filmabschnitts (61) größer als ein Innendurchmesser (Y) des Verstärkungsrings (81) ist, der in dem Großdurchmesseröffnungsabschnitt (8) des einen Endes eingebettet ist, wobei der Filmabschnitt (61) in einer Trommelform ausgebildet ist, und
eine Dicke (t1) eines Abschnitts des Filmabschnitts (61) mit Maximalaußendurchmessers (Z) ausgebildet ist, um dünner als eine Dicke (t2) an einer Seite des Kleindurchmesseröffnungsabschnitts (7) des anderen Endes des Filmabschnitts (61) und als eine Dicke (t3) an einer Seite des Großdurchmesseröffnungsabschnitts (8) des einen Endes des Filmabschnitts (61) zu sein.

2. Staubschutzabdeckung für ein Kugelgelenk gemäß Anspruch 1, wobei die Staubschutzabdeckung eingerichtet ist, um dadurch geformt zu werden, dass sie durch eine Kernform, die etwas kleiner als der Innendurchmesser (Y) des Verstärkungsrings (81) ist, und eine Vielzahl von getrennten halbmondförmigen Formen konstruiert wird, die eine Trommelform ausbilden und halbmondförmige Querschnitte haben, und das sie durch eine Metallform ausgebildet wird, bei der diese Formen herausgenommen werden, während die Formen nacheinander demontiert werden.

## Revendications

1. Cache-poussière pour un joint à rotule, le joint à rotule comprenant :
une partie de tête sphérique (2) formée dans une extrémité d'un pivot à rotule (1), la partie de tête sphérique étant retenue à l'intérieur d'une douille (3) ;
un arbre (4) dans l'autre extrémité dudit pivot à rotule (1), l'arbre étant attaché et fixé à un joint d'articulation (5) ;
le cache-poussière comprenant :
une partie d'ouverture de grand diamètre d'une première extrémité (8) ayant une bague de renforcement encastrée (81), la partie d'ouverture de grand diamètre d'une première extrémité pouvant être fixée et retenue sur une surface périphérique externe de ladite douille (3) ;
la partie d'ouverture de petit diamètre de l'autre extrémité (7) ayant une bague de renforcement encastrée (9), la partie d'ouverture de petit diamètre de l'autre extrémité pouvant être retenue sur ledit arbre (4) ;
une partie de film (61) raccordant ladite partie d'ouverture de grand diamètre (8) et ladite partie d'ouverture de petit diamètre (7) ; et
le cache-poussière étant réalisé avec un matériau élastique,
**caractérisé en ce que** :
dans un état non monté, un diamètre interne maximum (X) de ladite partie de film (61) est plus grand qu'un diamètre interne (Y) de ladite bague de renforcement (81) qui est encastrée dans ladite partie d'ouverture de grand diamètre d'une première extrémité (8), ladite partie de film (61) est formée en forme de tambour, et
une épaisseur (t1) d'une partie de diamètre externe maximum (Z) de ladite partie de film (61) est formée pour être plus fine qu'une épaisseur (t2) du côté de la partie d'ouverture de petit diamètre de l'autre extrémité (7) de ladite partie de film (61) et qu'une épaisseur (t3) du côté d'une partie d'ouverture de grand diamètre d'une première extrémité (8) de ladite partie de film (61).

2. Cache-poussière pour un joint à rotule selon la revendication 1, dans lequel le cache-poussière est configuré pour être moulé en étant construit par une matrice centrale qui est quelque peu inférieure au diamètre interne (Y) de la bague de renforcement (81), et une pluralité de matrices en forme de demi-lune séparées qui forment une forme de tambour et ont une section transversale en forme de demi-lune et étant formées par un moule métallique de moulage qui enlève ces matrices tout en démontant séquentiellement les matrices.
